# EUROPEAN PATENT APPLICATION

(11) **EP 1 881 674 A1**
(43) Date of publication of application: **23.01.2008**
(21) Application number: 07710871.0
(22) Date of filing: 07.02.2007
(51) Int. Cl.: H04L 29/06, G06F 15/16

(54) **A SYSETM, DEVICE AND METHOD FOR FILTERING SESSION INITIATION PROTOCOL MESSAGE**

(30) Priority: 21.04.2006 CN 200610074480
(71) Applicant: Huawei Technologies Co., Ltd., Longgang District Shenzhen, Guangdong Province, 518129 (CN)
(72) Inventor: MR, Prakasha, Level 4, Leela Galleria, Bangalore 560008 (IN); NATH, Santosh, Kumar, Level 4, Leela Galleria, Bangalore 560008 (IN)
(74) Representative: Körber, Martin Hans
(86) International application number: PCT/CN2007/000412
(87) International publication number: WO 2007/121647

(57) **Abstract**

A system for filtering a Session Initial Protocol (SIP) message includes: a SIP Application Server AS, a SIP proxy, a first filtering unit and a second filtering unit; the first filtering unit generates filtering criteria and sends the filtering criteria to the second filtering unit; the second filtering unit filters a SIP message sent from the SIP proxy to the SIP AS according to the filtering criteria, and instructs the SIP proxy to discard the SIP message or instructs the SIP proxy to send the SIP message to the SIP AS. Embodiments of the present invention further provide a method for filtering the SIP message. Because the SIP messages sent from the SIP proxy to the SIP AS are filtered, the load of the SIP AS may be effectively controlled, and unnecessary SIP messages may be intercepted.

## Description

### Field of the Invention

The present invention relates to Session Initial Protocol (SIP) application technologies, and more particularly, to system and method for screening SIP message.

### Background of the Invention

SIP is an Internet Protocol (IP) phone signaling protocol proposed by Internet Engineering Task Force (IETF). The original objective of the SIP is to implement signaling control for an IP network and communication with a SIP proxy, so as to construct a next generation Value-Added Service (VAS) platform and provide better VAS for telecommunication, bank and finance industries.

The SIP is a portion of the IETF standard procedure and is based on Simple Mail Transport Protocol (SMTP) and Hyper Text Transport Protocol (HTTP). The SIP is to generate, modify and terminate a session of one participant or between multiple participants. The session includes an Internet multimedia conference, an Internet (or any IP network) telephone call and a multimedia publication. The SIP also supports new services of the IP network, such as Instant Messaging (IM), voice conference and uniform message. The SIP has become a call control protocol of 3rd Generation (3G) communication service.

Because the SIP is simple, easy to extend and convenient for implementation, it has gradually become an important protocol for Next Generation Intelligent Network (NGIN) and IP Multimedia Subsystem (IMS) of the 3G network. More and more client software and intelligent multimedia terminals support the SIP and servers and soft switch devices implemented by the SIP are increasing.

The SIP service is an application implemented by the SIP protocol, e.g., Voice over IP (VoIP) service, Presence service and IM service.

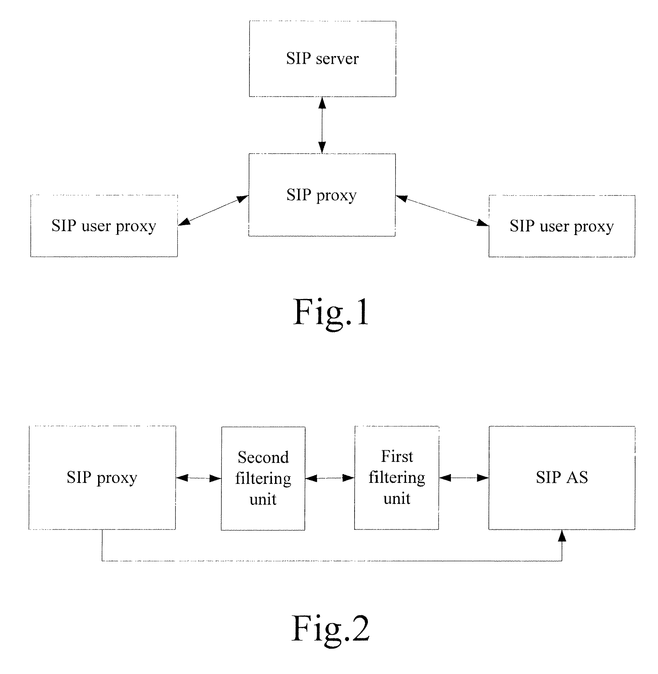

Figure 1 is a schematic diagram illustrating a structure of a SIP network. Refer to Figure 1, a SIP user proxy connects to a SIP Application Server (AS) over a SIP proxy.

The SIP AS is an entity for controlling and executing SIP based services stored in the SIP AS and is an important portion of the communication network using the SIP as the multimedia session control protocol. The SIP AS performs the role of a Back-to-Back User Proxy (B2BUA) and works with the SIP proxy to route a call. Because the SIP AS is a centralized entity offering VAS, it is necessary to control SIP messages sent to the SIP AS. The reason is that, to start a SIP service successfully, it is necessary to control the load of the SIP AS to a certain level. On the other hand, not all messages forwarded from the SIP proxy to the SIP AS are necessary. The forwarding of all the messages wastes transmission resources and greatly increases the load of SIP AS. Currently there is no mechanism provided for controlling the SIP messages sent to the SIP AS from the SIP proxy.

### Summary of the Invention

Embodiments of the present invention provide a system and method for screening a Session Initial Protocol (SIP) message to control the SIP messages sent to the SIP AS, thereby control load of a SIP Application Server (AS).

According to an embodiment of the present invention, a system for filtering a SIP message includes: a first filtering unit, capable of generating a filtering criteria and send the filtering criteria; a second filtering unit, capable of receiving the filtering criteria from the first filtering unit, filtering a SIP message sent from a SIP proxy to a SIP AS according to the filtering criteria, and instructing the SIP proxy to discard the SIP message if the SIP message meets the filtering criteria or instructing the SIP proxy to send the SIP message to the SIP AS if the SIP message does not meet the filtering criteria.

According to another embodiment of the present invention, a system for filtering a SIP message includes: a criteria generation unit, capable of generating a filtering criteria for filtering a SIP message sent from a SIP proxy to a SIP AS; a criteria encapsulating unit, capable of sending a filtering criteria delivering message, the filtering criteria delivering message comprises the filtering criteria.

According to another embodiment of the present invention, a system for filtering a SIP message includes: a criteria retrieving unit, capable of retrieving a filtering criteria from a filtering criteria delivering message and sending the filtering criteria; a filtering execution unit, capable of receiving the filtering criteria from the criteria retrieving unit, filtering the SIP message sent from a SIP proxy to a SIP AS according to the filtering criteria.

According to another embodiment of the present invention, a method for filtering a SIP message includes: generating a filtering criteria for filtering a SIP message sent from a SIP proxy to a SIP AS; filtering the SIP message according to the filtering criteria.

As can be seen from the above technical solution, the first filtering unit and the second filtering unit are configured in the embodiments of the present invention. The first filtering unit generates filtering criteria and sends the filtering criteria to the second filtering unit. The second filtering unit filters the SIP message sent from the SIP proxy to the SIP AS according to filtering criteria. If the SIP message meets the filtering criteria, the first filtering unit instructs the SIP proxy to discard the SIP messages. Otherwise, the first filtering unit instructs the SIP proxy to send the SIP message to the SIP AS. Thus, the SIP message sent from the SIP proxy to the SIP AS is filtered, i.e. the SIP message which is not necessary for the SIP AS is discarded and the SIP message necessary for the SIP AS is sent. Therefore, the load of the SIP AS may be effectively controlled, and the unnecessary SIP message may be intercepted. In addition, embodiments of the present invention not only filters the SIP message according to certain detailed rules, but also controls the load by controlling the number of SIP message sent to the SIP AS, so as to attain the object of controlling the call number.

### Brief description of the drawings

Figure 1 is a schematic diagram of a SIP network.
Figure 2 is a schematic diagram of a system for filtering a SIP message according to an embodiment of the present invention.
Figure 3 is a schematic diagram of a first filtering unit and a second filtering unit in the system for filtering the SIP message according to an embodiment of the present invention.
Figure 4 is a flowchart for filtering the SIP message according to an embodiment of the present invention.

### Detailed description of the invention

The present invention is hereinafter further described in detail with reference to accompanying drawings and embodiments of the present invention. It should be appreciated that the embodiments are used for explaining the present invention but not used for limiting the protection scope of the present invention.

In embodiments of the present invention, a first filtering unit and a second filtering unit are configured; the first filtering unit generates filtering criteria and sends the filtering criteria to the second filtering unit; the second filtering unit filters a SIP message sent from the SIP proxy to a SIP AS according to the filtering criteria, and instructs the SIP proxy to discard the SIP message if the SIP message meets the filtering criteria, or instructs the SIP proxy to send the SIP message to the SIP AS if the SIP message does not meet the filtering criteria.

Figure 2 is a schematic diagram of a SIP message filtering system according to an embodiment of the present invention. Referring to Figure 2, the system includes the SIP AS, the first filtering unit, the second filtering unit and the SIP proxy. The first filtering unit generates filtering criteria and sends the filtering criteria to the second filtering unit; the second filtering unit filters the SIP message sent from the SIP proxy to the SIP AS according to the filtering criteria, and instructs the SIP proxy to discard the SIP message if the SIP message meets the filtering criteria, or instructs the SIP proxy to send the SIP message to the SIP AS if the SIP message does not meet the filtering criteria.

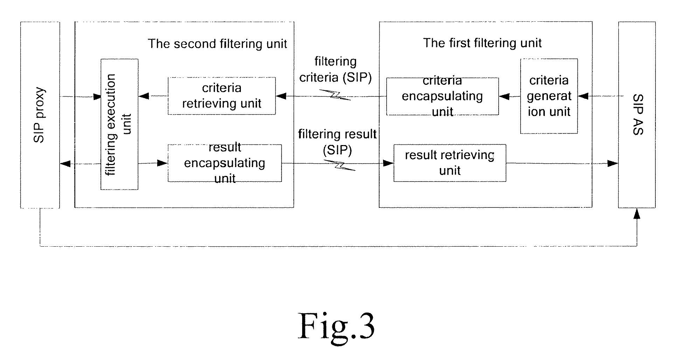

Figure 3 is a schematic diagram illustrating a structure of a first filtering unit and a second filtering unit in the SIP message filtering system according to an embodiment of the present invention. Referring to Figure 3, the first filtering unit is connected with the SIP AS and the second filtering unit is connected with the SIP proxy. Preferably, the first filtering unit and the SIP AS are located in the same physical entity; the second filtering unit and the SIP proxy are located in the same physical entity.

The first filtering unit includes a criteria generation unit, a criteria encapsulating unit and a result retrieving unit. The second filtering unit includes a criteria retrieving unit, a result encapsulating unit and a filtering execution unit.

The criteria generation unit generates the filtering criteria for filtering the SIP message spontaneously or upon an instruction from the SIP AS, and sends the filtering criteria to the criteria encapsulating unit. The criteria encapsulating unit sends the filtering criteria to the criteria retrieving unit through a filtering criteria delivering message. The criteria retrieving unit retrieves the filtering criteria from the filtering criteria delivering message and sends the filtering criteria to the filtering execution unit. The filtering execution unit filters the SIP message sent from the SIP proxy to the SIP AS according to the filtering criteria received, returns a first instruction to the SIP proxy instructing the SIP proxy to discard the SIP message or returns a second instruction to the SIP proxy instructing the SIP proxy to send the SIP message to the SIP AS.

If it is required to report a filtering result to the SIP AS, the filtering execution unit sends the filtering result to the result encapsulating unit. The result encapsulating unit sends the filtering result to the result retrieving unit through a filtering result reporting message. The result retrieving unit retrieves the filtering result from the filtering result reporting message and sends the filtering result to the SIP AS.

The filtering criteria delivering message and the filtering result reporting message are both messages defined by the SIP, i.e. SIP messages. The SIP messages used for the filtering criteria delivering message and the filtering result reporting message may be newly-defined SIP messages or existing SIP messages, e.g., a SUBSCRIBE message as the filtering criteria delivering message, and a NOTIFY message as the filtering result reporting message.

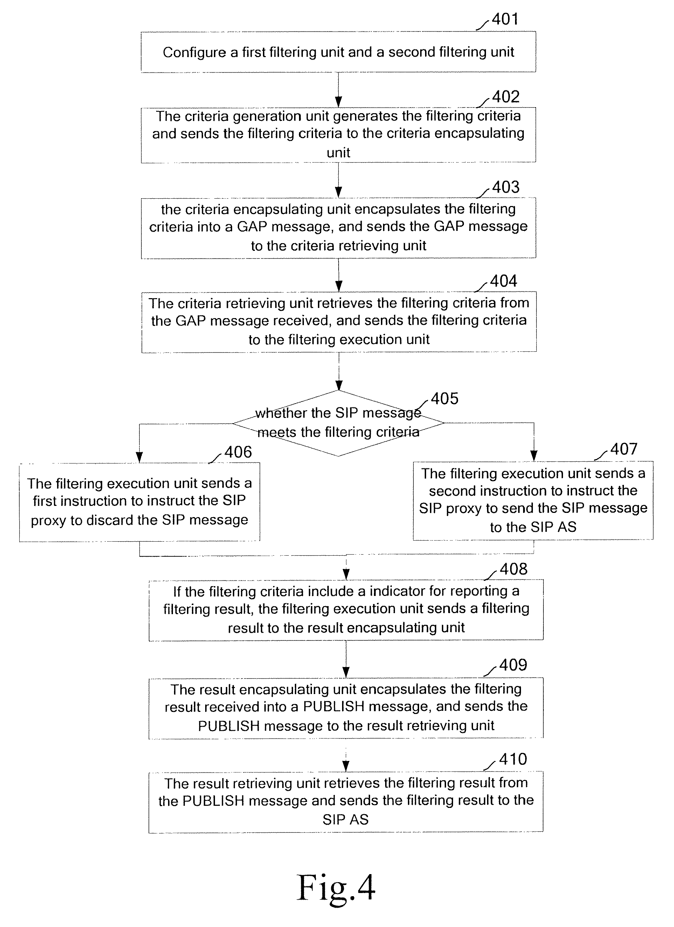

Embodiments of the present invention further provide a method for filtering a SIP message. Figure 4 is a flowchart illustrating a method for filtering a SIP message according to an embodiment of the present invention. In this embodiment, a newly-defined SIP message, GAP message, is used for sending the filtering criteria. An existing PUBLISH message may be used for reporting the filtering result to the SIP AS if required. As can be seen from Figure 4, the method includes:
Block 401: Configure a first filtering unit and a second filtering unit. Specifically, configure a criteria generation unit, a criteria encapsulating unit and a result retrieving unit connected with the SIP AS; configure a criteria execution unit, a criteria retrieving unit and a result encapsulating unit connected with the SIP proxy. The criteria generation unit is capable of generating the filtering criteria for filtering the SIP message spontaneously or upon an instruction from the SIP AS, and sending the filtering criteria to the criteria encapsulating unit. The criteria encapsulating unit is capable of sending the filtering criteria through the GAP message. The criteria retrieving unit is capable of retrieving the filtering criteria from the GAP message. The filtering execution unit is capable of filtering the SIP message sent from the SIP proxy to the SIP AS according to the filtering criteria received from the criteria retrieving unit, returning a first instruction to the SIP proxy instructing the SIP proxy to discard the SIP message or returning a second instruction to the SIP proxy instructing the SIP proxy to send the SIP message to the SIP AS. The result encapsulating is capable of sending the filtering result through the PUBLISH message. The result retrieving unit is capable of retrieving the filtering result from the PUBLISH message.

Preferably, the functions of the criteria encapsulating unit, the criteria retrieving unit, the result encapsulating unit and the result retrieving unit may be implemented by adding SIP event packages in them respectively; wherein the SIP event packages implement criteria delivering and criteria reporting through the GAP and the PUBLISH messages.

Block 402: The criteria generation unit generates the filtering criteria and sends the filtering criteria to the criteria encapsulating unit. The criteria generation unit may generate the filtering criteria spontaneously or upon an instruction from the SIP AS. The filtering criteria may be generated based on parameters of existing dialogs (calls), maximum limit of simultaneous calls, maximum Busy Hour Call Attempt (BHCA), percentage of calls to be dropped and/or accepted.

The filtering criteria may include a filtering condition and a filtering mode. The filtering condition may be a condition made according to different filtering principles for filtering the SIP message. The filtering mode specifies to the processing for the filtering result.

The filtering condition may include a field value in a header of the SIP message, a combination of more than one field values in the header of the SIP message, a value of media type in the header of the SIP message, a combination of the field value and the value of the media type, or a combination of several field values and the value of the media type. The filtering condition may include a maximum number of SIP messages sent within a time period. For example, if the maximum number of SIP messages which are allowed to be sent by the SIP proxy per second is 1, it means to forward at most one SIP message within one second.

The filtering mode may include static filtering and dynamic filtering. The static filtering is to perform filtering at a designated date or time. For the static filtering, a time period should set in the filtering criteria. The dynamic filtering is to perform filtering at any moment according to detailed criteria. For the dynamic filtering, it is not necessary to set a time period in the filtering criteria.

The filtering mode may include an indicator for reporting a filtering result. The indicator may be an identifying bit. If the value of the identifying bit is true, it indicates that the indicator is included in the filtering mode. If the value of the identifying bit is false, it indicates that the indicator is not included in the filtering mode. The indicator may also be a field. If the field is present in the filtering mode, it indicates that the indicator is included in the filtering mode. If the filed is absent, it indicates that the indicator is not included in the filtering mode.

The filtering mode may also include another indicator of whether to send a response to a dropped or accepted call. If it is required to send the response to the dropped or accepted call, the response may be sent to the SIP user proxy through a response code or a Voice extensible Mark Language (VXML) file identifier. The VXML file identifier is used for instructing the SIP user proxy to play an announcement. If it is not required to response to the dropped or accepted call, the response is not sent to the SIP user proxy.

The filtering mode may include a number of the SIP messages being filtered by the SIP proxy, i.e. the SIP proxy reports the number of the SIP messages being filtered to the SIP AS.

An Augmented Backus-Naur Form grammar (ABNF) may be used for constructing filtering parameters for the filtering criteria.

Block **403:** After receiving the filtering criteria, the criteria encapsulating unit encapsulates the filtering criteria into a filtering criteria delivering message, and sends the filtering criteria delivering message to the criteria retrieving unit. In this embodiment, the filtering criteria delivering message is a GAP message.

An exemplary GAP message is as follows:
(Message header)
GAP sip:user@host.example.com SIP/2.0
Via: SIP/2.0/UDP pa.example.com;branch=z9hG4bK8sdf2
To: <sip:proxy@example.cum>;tag= 12341234
From: <sip:b2ba@example.com>;
Call-ID: 12345678@host.example.com
CSeq: 1 GAP
Max-Forwards: 70
Applicable-Time-Start: 20050501113005
Applicable-Time-End: 20050601113005
Content-Type: applicationlcriteria-filter
Content-Length: ...
(Message body)
FilteringMethod:
To = *200*
From = 080252*@example.com
ResponseforFiltering:
Reject, VXML id= A239992, response code= 407
NeedReport: True
ReportThresholdValue: 10

As can be seen from the above example, the message body of the GAP message includes four filtering parameters: FilteringMethod, ResponseforFiltering, NeedReport and ReportThresholdValue.

The FilteringMethod includes filtering criteria for filtering headers including "To", "From" or "Session Description Protocol (SDP)" of the SIP message. In the above example, the SIP message meeting the following criteria is filtered: the value of the "To" field is "200", the value of anterior bits of the "From" field are "080252" and the value of posterior bits of the "From" field is "@example.com".

The ResponsforFiltering indicates whether to send a response for an initial SIP message INVITE meeting the filtering criteria. In the above example, the response is sent when the INVITE meets the filtering criteria and is rejected, the response code is 407 and the VXML file identifier is A239992.

The NeedReport indicates whether to report a filtering result. In the above example, if the value of the NeedReport is set to be true, the SIP proxy reports a filtering result to the SIP AS.

The ReportThresholdValue specifies a threshold value for a filtering counter, i.e. the SIP proxy reports a filtering result to the SIP AS when the value of the filtering counter exceeds the threshold value. In the above example, the threshold value of the filtering counter is 10, which indicates that the SIP proxy should report the filtering result to the SIP AS after filtering 10 SIP messages.

The header of the GAP message further includes a time period for applying the filtering. The start time of the time period is 11:30:05 a.m., May 1, 2005 and the end time is 11:30:05 a.m., June 1,2005. It indicates that the static filtering should be applied within the above time period.

Block **404:** The criteria retrieving unit retrieves the filtering criteria from the GAP message, and sends the filtering criteria to the filtering execution unit.

Block **405:** The filtering execution unit filters the SIP message sent from the SIP proxy to the SIP AS according to the filtering criteria. The filtering execution unit determines whether the SIP message meets the filtering criteria; if the SIP message meets the filtering criteria, proceed to Block **406;** otherwise, proceed to Block **407.**

If the filtering mode is the static filtering, the SIP proxy filters the SIP message sent to the SIP AS within the date and time designated by the filtering criteria. If the filtering mode is the dynamic filtering, the SIP proxy filters the SIP message sent to the SIP AS at any moment.

Block **406:** The filtering execution unit sends a first instruction to instruct the SIP proxy to discard the SIP message sent to the SIP AS, and proceed to Block 408.

If the filtering criteria include the indicator to send a response to a SIP session meeting the filtering criteria, the first instruction may include the indicator such as a response code, a VXML file identifier or playing an announcement.

Block **407:** The filtering execution unit sends a second instruction to instruct the SIP proxy to send the SIP message to the SIP AS, and proceed to Block **408.**

If the filtering criteria include the indicator to send a response to a SIP session not meeting the filtering criteria, the second instruction may include the indicator such as a response code, a VXML file identifier or playing an announcement.

Block **408:** If the filtering criteria include an indicator for reporting a filtering result, the filtering execution unit sends a filtering result to the result encapsulating unit.

The filtering result may be reported according to the following modes.
one of the reporting modes is report at any moment, i.e. send the filtering result to the SIP AS each time filtering one SIP message;
another mode for reporting is report periodically, i.e., send the filtering result to the SIP AS at a designated date and time;
the other mode for reporting is report when the number of the SIP messages being filtered exceeds a threshold value, i.e. set a filtering counter in the filtering execution unit, each time filtering one SIP message, add one to the filtering counter; when the value of the filtering counter exceeds the threshold value, send the filtering result to the result encapsulating unit, and reset the filtering counter.

Block **409:** The result encapsulating unit encapsulates the filtering result into a filtering result reporting message, and sends the filtering result reporting message to the result retrieving unit. In this embodiment, the filtering result reporting message is a PUBLISH message.

Block **410:** The result retrieving unit retrieves the filtering result from the filtering result reporting message and sends the filtering result to the SIP AS.

In the above embodiment, a newly-defined GAP message is used for delivering the filtering criteria and an existing PUBLISH message is used for reporting the filtering result. An embodiment of the present invention further includes other SIP messages for delivering the filtering criteria. For example, an existing SUBSCRIBE message is used for delivering the filtering criteria; and an existing NOTIFY message is used for reporting the filtering result. In this case, it is necessary to define a new event package for filtering the SIP message. The new event package supports the criteria encapsulating unit to send the filtering criteria through the SUBSCRIBE message and supports the criteria retrieving unit to obtain input information from the SUBSCRIBE message and configure filtering criteria according to the input information. The event package further supports the result encapsulating unit to report a filtering result through the NOTIFY message and supports the result retrieving unit to retrieve the filtering result from the NOTIFY message. The detailed process will not be repeated herein.

Because the SIP messages sent from the SIP proxy to the SIP AS are filtered, i.e. the unnecessary SIP message is filtered and the necessary SIP message is forwarded to the SIP AS. As a result, the load of the SIP AS may be effectively controlled, and the unnecessary SIP messages may be intercepted. For example, the SIP AS is responsible for processing a basic call initiated by a user; if the user is barred due to his/her insufficient balance, the SIP AS may instruct the SIP proxy to intercept the call at the SIP proxy instead of forwarding the call to the SIP AS.

It should be emphasized that the above-described embodiments, particularly, any preferred embodiments, are merely possible examples of implementations, merely set forth for a clear understanding of the principles of the invention. Many variations and modifications may be made to the above-described preferred embodiments without departing substantially from the principles of the invention. All such modifications and variations are intended to be included herein within the scope of this disclosure and the above-described preferred embodiments and protected by the following claims.

## Claims

1. A system for screening a Session Initial Protocol SIP message, comprising:
a first filtering unit, capable of generating a filtering criteria and sending the filtering criteria;
a second filtering unit, capable of receiving the filtering criteria sent from the first filtering unit, filtering a SIP message sent from a SIP proxy to a SIP Application Server AS according to the filtering criteria, instructing the SIP proxy to discard the SIP message if the SIP message meets the filtering criteria or instructing the SIP proxy to send the SIP message to the SIP AS if the SIP message does not meet the filtering criteria.

2. The system of claim 1, wherein the second filtering unit is further capable of reporting a filtering result to the SIP AS through the first filtering unit.

3. The system of claim 1, wherein the first filtering unit comprises:
a criteria generation unit, capable of generating the filtering criteria, the filtering criteria is used to filter the SIP message;
a criteria encapsulating unit, capable of sending a filtering criteria delivering message, the filtering criteria delivering message comprises the filtering criteria; and
the second filtering unit comprises:
a criteria retrieving unit, capable of retrieving the filtering criteria from the filtering criteria delivering message and sending the filtering criteria;
a filtering execution unit, capable of receiving the filtering criteria from the criteria retrieving unit, filter the SIP message according to the filtering criteria.

4. The system of claim 3, wherein the second filtering unit further comprises a result encapsulating unit, capable of receiving a filtering result from the filtering execution unit and sending the filtering result through a filtering result reporting message; and
the first filtering unit further comprises a result retrieving unit, capable of retrieving the filtering result from the filtering result reporting message and sending the filtering result retrieved to the SIP AS.

5. The system of claim 3, wherein the filtering criteria is generated according to a parameter of the SIP AS.

6. The system of any one of claims 3 to 5, wherein the first filtering unit and the SIP AS are located in a first physical entity; the second filtering unit and the SIP proxy are located in a second physical entity.

7. A system for screening a Session Initial Protocol SIP message, comprising:
a criteria generation unit, capable of generating a filtering criteria for filtering a SIP message sent from a SIP proxy to a SIP AS;
a criteria encapsulating unit, capable of sending a filtering criteria delivering message, the filtering criteria delivering message comprises the filtering criteria.

8. The system of claim 7, further comprising: a result retrieving unit, capable of retrieving a filtering result and send the filtering result.

9. A system for screening a Session Initial Protocol SIP message, comprising:
a criteria retrieving unit, capable of retrieving a filtering criteria from a filtering criteria delivering message and sending the filtering criteria;
a filtering execution unit, capable of receiving the filtering criteria from the criteria retrieving unit, filtering the SIP message sent from a SIP proxy to a SIP AS according to the filtering criteria.

10. The system of claim 9, further comprising: a result encapsulating unit, capable of sending a filtering result through a filtering result reporting message.

11. A method for screening a Session Initial Protocol SIP message, comprising:
generating a filtering criteria for filtering a SIP message sent from a SIP proxy to a SIP AS;
filtering the SIP message according to the filtering criteria.

12. The method of claim 11, wherein the filtering criteria comprises at least one of a filtering condition and a filtering mode.

13. The method of claim 11, wherein the filtering criteria is generated according to a parameter of the SIP AS.

14. The method of claim 13, wherein the parameter of the SIP AS comprises at least one of: parameters of existing calls, maximum limit of simultaneous calls, maximum Busy Hour Call Attempt (BHCA), percentage of calls to be dropped and/or accepted.

15. The method of claim 12, wherein the filtering condition comprises any one of: a field value in a header of the SIP message, a combination of more than one field values in the header of the SIP message, a value of a media type in the header of the SIP message, a combination of the field value and the value of the media type and a combination of several field values and the value of the media type.

16. The method of claim 12, wherein the filtering condition comprises a maximum number of the SIP messages allowed to be sent within a period.

17. The method of claim 12, wherein the filtering mode comprises a first indicator for reporting a filtering result to the SIP AS; and
the method further comprises:
reporting the filtering result to the SIP AS according to the filtering mode.

18. The method of claim 17, wherein reporting the filtering result to the SIP AS comprises:
setting a filtering counter;
when filtering one SIP message sent from the SIP proxy to the SIP AS, adding one to the filtering counter; when the value of the filtering counter reaches a threshold value, reporting the filtering result for filtering the SIP message to the SIP AS, and resetting the filtering counter.

19. The method of claim 12, wherein the filtering mode comprises a second indicator indicating to respond to an initiator corresponding to the SIP message meeting the filtering criteria; and
the method further comprises:
instructing the SIP proxy to respond to the initiator.

20. The method of claim 12, wherein the filtering mode comprises a third indicator to respond to an initiator corresponding to the SIP message not meeting the filtering criteria; and
the method further comprises:
instructing the SIP proxy to respond to the initiator.

21. The method of claim 19 or 20, wherein the instructing the SIP proxy to respond to the initiator comprises: instructing the SIP proxy to respond to the initiator through a response code, a Voice Extensible Makeup Language (VXML) file identifier or playing an announcement.

22. The method of claim 12, wherein the filtering mode comprises any one of a static filtering and a dynamic filtering; the method further comprising:
filtering the SIP message within a pre-designated period according to the filtering criteria if the filtering mode comprises the static filtering; or,
filtering the SIP message in real time if the filtering mode comprises the dynamic filtering.

23. The method of claim 11 or 17, wherein generating the filtering criteria comprises:
configuring the filtering criteria , and
sending the filtering criteria through a filtering criteria delivering message.

24. The method of claim 23, wherein the filtering criteria delivering message is any one of a newly defined SIP message and a SUBSCRIBE message; and
the sending the filtering criteria to the SIP proxy side through the filtering criteria delivering message comprises: carrying the filtering criteria in the filtering criteria delivering message, and sending the filtering criteria delivering message to the SIP proxy side.

25. The method of claim 17, wherein the reporting the filtering result comprises:
sending the filtering result through a filtering result reporting message.

26. The method of claim 25, wherein the filtering result reporting message is any one of a PUBLISH message and a NOTIFY message; and
the sending the filtering result to the SIP AS side through the filtering result reporting message comprises: carrying the filtering result in the filtering result reporting message, and sending the filtering result reporting message to the SIP AS side.
